**Europäisches Patentamt**

**European Patent Office**

**Office européen des brevets**

(19)

(11) Veröffentlichungsnummer: **0 107 019**

**B1**

(12) **EUROPÄISCHE PATENTSCHRIFT**

(45) Veröffentlichungstag der Patentschrift: 17.05.89

(51) Int. Cl.⁴: **H 05 B 41/29**

(21) Anmeldenummer: 83109148.3

(22) Anmeldetag: 16.09.83

E R R A T U M

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | S | Sp | Z | LAUTET BERICHTIGT :<br>SHOULD READ :<br>DEVRAIT ETRE LU : |
|---|---|---|---|---|
| eine bei der der Funkstörpegel | 5 | 7 | 19 | eine Betriebsfrequenz bei der der Funkstörpegel |
| den Schenkeln (2,3) Blenden (8,9) | 5 | 8 | 2 | den Schenkeln (3,4) Blenden (28,29) |
| Schenkel (2,3) definierten Ebene (10) | 5 | 8 | 4 | Schenkel (3,4) definierten Ebene (30) |
| Hälfte jeden Schenkels (2,3) abdek- | 5 | 8 | 5 | Hälfte jeden Schenkels (3,4) abdek- |
| daß die Blenden (8,9) sich über | 5 | 8 | 8 | daß die Blenden (28,29) sich über |
| Höhe Schenkel (2,3) erstrecken. | 5 | 8 | 9 | Höhe Schenkel (3,4) erstrecken. |
| daß die Blenden (8,9) Halbscha- | 5 | 8 | 11 | daß die Blenden (28,29) Halbscha- |
| der Schenkel (2,3) angepaßtem | 5 | 8 | 12/13 | der Schenkel (3,4) angepastem |
| Schenkel (2,3) aufgesetzt sind. | 5 | 8 | 14/15 | Schenkel (3,4) aufgesetzt sind. |
| die Blenden Streifen (11,12) | 5 | 8 | 17 | die Blenden Streifen (31,32) |
| die den Spalt (13) zwischen | 5 | 8 | 18 | die den Spalt (33) zwischen |
| (2,3) und jewels eine Hälfte jeden Schenkels (2,3) überdeckend gegen die beiden Schenkel (2,3) | 5 | 8 | 19/20 | (3,4) und jewels eine Hälfte jeden Schenkels (3,4) überdeckend gegen die beiden Schenkel (3,4) |
| daß die Streifen (11,12) eben | 5 | 8 | 23 | daß die Streifen (31,32) eben |
| Randzonen (14,15; 16,17) mit dem | 5 | 8 | 26 | Randzonen (34,35; 36,37) mit dem |
| der Schenkel (2,3) angepaßtem | 5 | 8 | 27 | der Schenkel (3,4) angepaßtem |
| daß die Blenden (8,9) | 5 | 8 | 31 | daß die Blenden (28,29) |

Tag der Entscheidung
über die Berichtigung )
Date of decision on )
rectification: ) 18.09.89
Date de décision portant )
sur modification: )

Ausgabe- und Ver- )
öffentlichungstag: )
Issue and publication )
date: ) 08.11.89
Date d'edition et de )
publication: )

Patbl.Nr.)

EPB no: 89/45

Bull. no:)

## Europäisches Patentamt

## European Patent Office

## Office européen des brevets

(11) Veröffentlichungsnummer: **0 107 019**
**B1**

(12) **EUROPÄISCHE PATENTSCHRIFT**

(45) Veröffentlichungstag der Patentschrift: **17.05.89**

(51) Int. Cl.⁴: **H 05 B 41/29**

(21) Anmeldenummer: **83109148.3**

(22) Anmeldetag: **16.09.83**

(54) Leuchte, insbesondere Signalleuchte für Wasserfahrzeuge.

(30) Priorität: **24.09.82 DE 3235381**
**18.01.83 DE 3301395**

(43) Veröffentlichungstag der Anmeldung:
**02.05.84 Patentblatt 84/18**

(45) Bekanntmachung des Hinweises auf die
Patenterteilung:
**17.05.89 Patentblatt 89/20**

(84) Benannte Vertragsstaaten:
**AT BE CH DE FR GB IT LI LU NL SE**

(56) Entgegenhaltungen:
**DE-A-2 604 730**
**FR-A-2 345 886**

**Die Akte enthält technische Angaben, die nach
dem Eingang der Anmeldung eingereicht
wurden und die nicht in dieser Patentschrift
enthalten sind.**

(73) Patentinhaber: **Rensch, Jürgen**
**Vogelsang 19**
**D-5650 Solingen 1 (DE)**

(72) Erfinder: **Rensch, Jürgen**
**Vogelsang 19**
**D-5650 Solingen 1 (DE)**

(74) Vertreter: **Niemann, Uwe, Dr.-Ing.**
**Ahornstrasse 41**
**D-4300 Essen 1 (DE)**

Courier Press, Leamington Spa, England.

## Beschreibung

Die Erfindung betrifft eine Leuchte, insbesondere Signalleuchte für Wasserfahrzeuge, mit einer oberhalb von 40 kHz betriebenen Leuchtstofflampe und einem zugeordneten Vorschaltgerät.

Signalleuchten für Wasserfahrzeuge, insbesondere Sportboote und dergleichen, sind in verschiedenen Ausführungsformen bekannt. Als Lichtquelle dient in der Regel eine Glühfadenlampe oder eine Soffittenlampe. Da Signalleuchten zumindest zeitweise von einer bordeigenen Batterie oder einem bordeigenen Akkumulator gespeist werden, sollen sie eine geringe Leistungsaufnahme bei großer Lichtausbeute besitzen.

Daneben werden an Bord von Wasserfahrzeugen auch Leuchtstofflampen eingesetzt, jedoch nur für Beleuchtungszwecke. Leuchtstofflampen haben eine wesentlich höhere Lichtausbeute als Glühfadenlampen. Die Lichtausbeute von Leuchtstofflampen kann noch dadurch gesteigert werden, daß sie mit einer hochfrequenten Spannung betrieben werden1 Es ist bekannt, daß die Lichtausbeute bis zu einer Betriebsfrequenz von etwa 35 KHz ansteigt. Darüber läßt sich keine Erhöhung der Lichtausbeute mehr feststellen.

Der Einsatz von Leuchtstofflampen insbesondere für Signalleuchten scheiterte aber bisher daran, daß Leuchtstofflampen ein Funkstörfeld abgeben, dessen Frequenzen bis in den MHz-Bereich reichen. Die Funkstörungen werden umso größer, je höher die Betriebsfrequenz ist. Bei Betriebsfrequenzen bis in den Bereich von etwa 35 KHz bleibt der Aufwand zur Funkentstörung in vertretbaren Grenzen. Bei höheren Betriebsfrequenzen läßt sich eine Funkentstörung nach der Grenzwertklasse B (VDE 0871) mit vertretbarem Aufwand jedoch nicht mehr erreichen. Höhere Betriebsfrequenzen können allerdings zur Verbesserung des Wirkungsgrades und der Lichtausbeute genutzt werden (DE—A—26 04 730).

Andererseits ist aus dem Dokument FR—A—2 345 886 eine Leuchte mit einer im HF-Bereich betriebenen Leuchtstofflampe und einem angeordneten Vorschaltgerät bekannt, wobei das Vorschaltgerät auf eine im Bereich zwischen 60 KHz und 100 KHz liegende Betriebsfrequenz abgestimmt ist, bei der der akustische Störpegel der Leuchtstofflampe zu einem Minimum wird oder ganz verschwindet.

Aufgabe der Erfindung ist es deshalb, bei einer Leuchte der eingangs beschriebenen Gattung das Funkstörfeld mit einfachen Mitteln so zu reduzieren, daß sie insbesondere als funkentstörte Signalleuchte für Wasserfahrzeuge einsetzbar ist.

Diese Aufgabe wird gelöst mit den Merkmalen des Anspruchs 1.

Bei den U-förmigen Leuchtstofflampen mit zueinander parallelen Schenkeln handelt es sich um sogenannte einseitig gesockelte Kompakt-Leuchtstofflampen, die derzeit mit einer Lampenleistung zwischen 7 und 11 Watt erhältlich sind. Wegen ihrer geringen Abmessungen eignen sich diese Leuchtstofflampen grundsätzlich auch für den Einsatz in Signalleuchten.

Überraschenderweise hat sich gezeigt, daß auf eine gesonderte Funkentstörung dann verzichtet werden kann, wenn die Leuchtstofflampe mit einer Betriebsfrequenz betrieben wird, die oberhalb von 40 KHz, insbesondere über 50 KHz, liegt. Bie diesen vergleichsweise hohen Betriebsfrequenzen gibt es jeweils eine Frequenz, bei der der Funkstörpegel der Leuchtstofflampe praktisch verschwindet. Die jeweilige Betriebsfrequenz liegt im allgemeinen unter 100 KHz. Bei einer einseitig gesockelten Kompakt-Leuchtstofflampe mit einer Lampenleistung von 7 Watt liegt dur funkstörpegelfreie Betriebsfrequenz zwischen 80 und 90 KHz.

Die überraschenden Eigenschaften der erfindungsgemäßen Leuchte werden darauf zurückgeführt, daß die in jeder Leuchtstofflampe sich ausbildenden Störfelder, die mit geeigneten Meßgeräten auch als stehende Wellen entlang der Leuchtstofflampe erfaßt werden können, bei eine U-förmigen Leuchtstofflampe aufgrund ihrer geometrischen Konfiguration und bei entsprechender Abstimmung des Vorschaltgerätes durch gegenseitige Überlagerung zum Verschwinden gebracht werden können. Das gelingt am einfachsten dadurch, daß das Vorschaltgerät dynamisch, d.h. unter Belastung durch die Leuchtstofflampe, im Hinblick auf minimalen Funkstörpegel abgestimmt wird.

Dazu kann das Vorschaltgerät einen transistorgesteuerten Generator, einen an dessen Transistor angeschlossenen Zünder mit einem justierbaren Transformator, sowie eine an den Transistor der Generators angeschlossene, von einem elektronischen Wischer aktivierte, transistorgesteuerte Hilfsimpulsstufe aufweisen. Ein für diese Zwecke besonders geeigneter Transformator ist in der DE—OS 31 30 049 beschrieben. Der Wischer kann ein übliches RC-Netzwerk sein. Üblicherweise wird der Generator primärseitig an den Transformator angeschlossen, der sekundärseitig unter Bildung von Resonanzkreisen an die Leuchtstofflampe angeschlossen ist.

Die Hilfsimpulsstufe liefert den notwendigen Startstrom zum Anschwingen des Transistors des Generators. Nach Ladung des RC-Wischers mindert die Hilfsimpulsstufe den Startstrom auf den Betriebsstrom, der ca. 80% des Startstroms beträgt. Dazu weist die Hilfsimpulsstufe einen Transistor auf, dessen Kollektor mit dem Kollektor des Transistors des Generators gekoppelt und dessen Basis mit dem Wischer verbunden ist, während sein Emitter über Dioden einerseits mit seiner Basis und andererseits mit der Basis des Transistors verbunden ist. Die Hilfsimpulsstufe schaltet dementsprechend den Transistor des Generators nur dann durch, wenn sie über den RC-Wischer aktiviert wird.

Bei der erfindungsgemäßen Leuchte kann das Vorschaltgerät für eine Eingangsgleichspannung zwischen 12 und 14 Volt ausgelegt sein, d.h. auf überliche Bordspannungen. Andere Eingangsspannungen sind möglich.

Die erfindungsgemäße Leuchte ist praktisch ohne zusätzlichen Aufwand funkentstört. Da die Leuchtstofflampe eine höhere Lichtausbeute als eine Glühfadenlampe besitzt und weniger Wärme abgibt, können Gehäuse für die Signalleuchte auch aus weniger wärmebeständigen Materialien hergestellt werden. Zugeordnete Gehäuse können kleiner sein. Bei Verwendung als Signalleuchte und/oder als Beleuchtung ist wegen der geringeren Wärmeentwicklung auch die Brandgefahr allgemein reduziert. Da das von der Leuchtstofflampe abgegebene Licht eine mehr zum UV-Bereich hin verschobene Spektralverteilung besitzt, ist eine derartige Signalleuchte insbesondere in der Dämmerung, aber auch nachts, über größere Entfernungen zu erkennen als eine Signalleuchte, die mit einer Glühfadenlampe ausgerüstet ist.

Für den Aufbau und die Eigenschaften von Signalleuchten für Wasserfahrzeuge gibt es bestimmte Vorschriften, die u.a. auch die Lichtverteilung solcher Signalleuchten regeln, wenn es sich dabei z.B. um sogenannte Topplaternen handelt. Insbesondere sollen Signalleuchten eine im wesentlichen konstante Sichtverteilungskurve aufweisen, d.h. die auf einem Kreis um die Signalleuchte gemessene Lichtverteilung soll über einen Winkelbereich von ca. 215 Grad konstant sein und an den Enden dieses Winkelbereiches über einen anschließenden Winkel von ca. 10 Grad bis auf Null zurückgehen. Die einseitig gesockelte Kompakt-Leuchtstofflampe besitzt aber zwei nebeneinander angeordnete, parallele Schenkel, die jeweils eine gesonderte Lichtquelle bilden. Zumindest im Nahbereich ergibt sich dadurch eine nicht konstante Lichtverteilungskurve. Das kann auf See dazu führen, daß ein Beobachter die Entfernung eines sich drehenden Schiffes oder Beginn und Ende des Drehmanövers falsch einschätzt.

Damit eine Signalleuchte der beschriebenen Art eine im wesentlichen konstante Lichtverteilungskurve aufweist, können zwischen den beiden Schenkeln Blenden angeordnet sein, die in einer Projektion auf die durch die beiden Schenkel definierten Ebene jeweils eine Hälfte jeden Schenkels abdecken. ·

Damit erhält man überraschenderweise eine konstante Lichtverteilungskurve. Die als Folge der Abdeckung eines Teils der Schenkel der Leuchtstofflampe sich ergebende Verringerung der Lichtstärke kann in Kauf genommen werden, weil Leuchtstofflampen ohnehin eine größer Lichtausbeute besitzen als herkömmliche Glühfadenlampen.

Die Blenden, die sich in der Regel über die gesamte Höhe der Schenkel erstrecken sollten, können Halbschalen mit dem Außerdurchmesser der Schenkel angepaßtem Innendurchmesser sein und auf die einander zugewandten Seiten der Schenkel aufgesetzt sein.

Einfacher ist eine Ausführung, bei der die Blenden Streifen sind, die den Spalt zwischen den Schenkeln und jeweils eine Hälfte jeden Schenkels überdeckend gegen die beiden Schenkel gesetzt sind, weil dann eine einfachere Befestigung der Blenden an der Leuchtstofflampe möglich ist. Das gilt nicht nur dann, wenn die Streifen eben sind, sondern auch dann, wenn die Streifen jeweils zwei schalenförmige Randzonen mit dem Außendurchmesser der Schenkel angepaßtem Innendurchmesser und einen die Randzonen verbindenden Steg aufweisen. In beiden Fällen können Befestigungselemente, wei Halteschrauben oder dergleichen, zwischen den beiden Schenkeln hindurchgeführt werden.

Im folgenden wird ein in der Zeichnung dargestelltes Ausführungsbeispiel der Erfindung erläutert; es zeigen;

Fig. 1 in schematischer Darstellung eine Signalleuchte, teilweise geschnitten, mit einer einseitig gesockelten Kompakt-Leuchtstofflampe und zugeordnetem Vorschaltgerät,

Fig. 2 ein Schaltbild des Vorschaltgerätes,

Fig. 3 die Ansicht einer einseitig gesockelten Kompakt-Leuchtstofflampe für eine Signalleuchte eines Wasserfahrzeuges,

Fig. 4 einen Schnitt in Richtung II—II durch den Gegenstand nach Fig. 1,

Fig. 5 eine andere Ausführung des Gegenstandes nach Fig. 4,

Fig. 6 eine weitere Ausführung des Gegenstandes nach Fig. 4,

Figs. 7, 8 und 9 verschiedene Projektionen der Leuchtstofflampe aus der Sicht eines Beobachters.

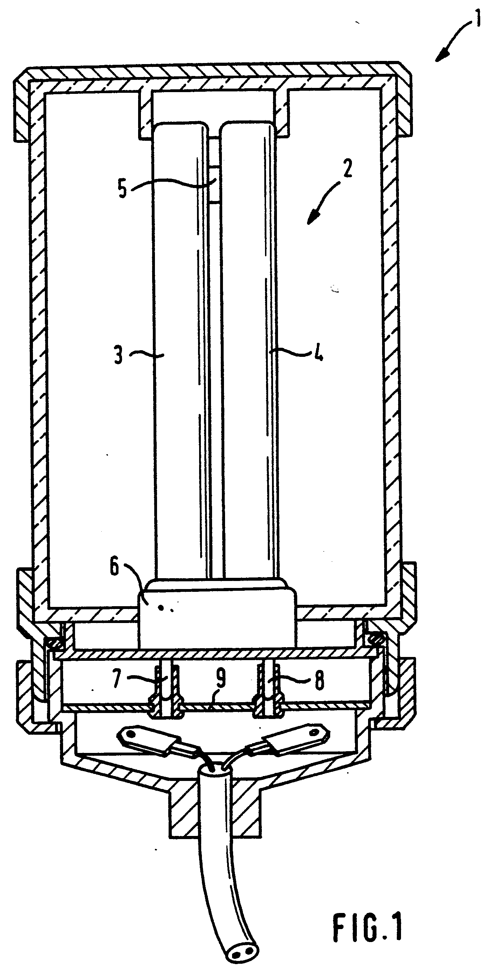

Die dargestellte Signalleuchte besitzt ein Gehäuse 1, das hier im einzelnen nicht näher beschrieben wird. Als Lichtquelle dient eine einseitig gesockelte Kompakt-Leuchtstofflampe 2 mit zwei zueinander parallelen Schenkeln 3, 4, die bei der in Figur 1 dargestellten Ausführung am oberer Ende durch einen U-Steg 5 (bei anderen Ausführungen durch einen U-Bogen) verbunden sind. Die unteren Enden der beiden Schenkel sind in einem gemeinsamen Sockel 6 gehalten, aus dem Anschlußstifte 7, 8 zu einer die Bauelemente des Vorschaltgerätes tragenden Leiterplatte 9 herausgeführt sind.

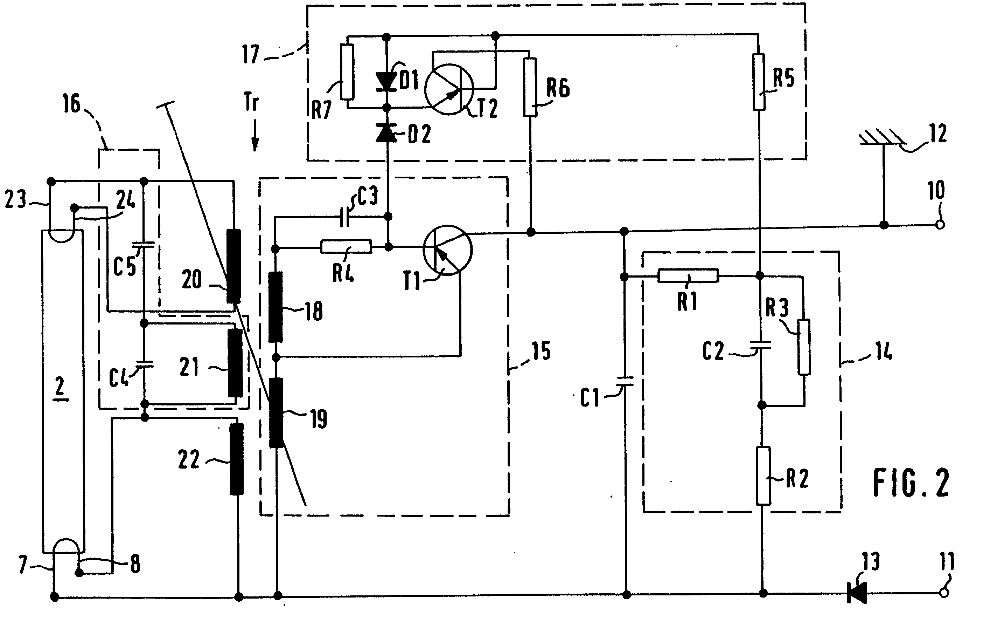

Das in Figur 2 dargestellte Vorschaltgerät ist für eine Eingangsgleichspannung von 24 V ausgelegt. Es besitzt zwei Eingangsklemmen 10, 11, von denen die negative Eingangsklemme 10 bei 12 geerdet ist. In der an die positive Eingangsklemme 11 anschließenden Leitung befindet sich eine Polschutzdiode 13, die Fehlschaltungen verhindern soll. Im übrigen gehören zum Vorschaltgerät ein Wischer 14, ein Generator 15, ein Zünder 16 und eine Hilfsimpulsstufe 17.

Der Wischer 14 ist ein übliches RC-Netzwerk mit einem Kondensator C2, einem diesem vorgeschalteten Ladewiderstand R1, einem parallel zum Kondensator C2 liegenden Entladewiderstand R3 und einem nachgeschalteten Pegeldefinitionswiderstand R2. Der Wischer ist über einen Basisschutzwiderstand R5 auf die Hilfsimpulsstufe 17 ausgekoppelt. Zwischen die beiden Eingangsklemmen 10, 11 ist ein Kondensator C1 gehalten.

Zum generator 15 gehört ein Transistor T1, dessen Kollektor an der Eingangsklemme 10 liegt und an dessen Basis ein RC-Netzwerk aus einem Kondensator C3 mit parallelgeschaltetem Widerstand R4 angeschlossen ist. Der Emitter des Transistors T1 liegt an einem Abgriff zwischen den beiden Wicklungen 18, 19 der Primärseite eines Transformators Tr. Die Wicklung 18 ist im übrigen an das RC-Netzwerk C3, R4 angeschlossen, während die Wicklung 19 an der zur Eingangsklemme 11 führenden Leitung liegt.

Bei dem Transformator Tr handelt es sich beispielsweise um eine Ausführung mit einen E-E-Kern, wie er unter anderm in der DE—OS 31 30 049 beschrieben ist.

Der Zünder 16 umfaßt die Sekundärseite des Transformators Tr mit Wicklungsabschnitt und die Leuchtstofflampe 2, die im Schaltbild der Figur 2 als gestreckte Röhre dargestellt ist, deren konstruktiver Aufbau jedoch dem in Figur 1 dargestellten entspricht. Die Enden des Wicklungsabschnittes 22 führen zu den Anschlußstiften 7, 8 der Leuchtstofflampe 2. Die Leuchtstofflampe besitzt insgesamt vier Anschlußstifte (von denen in Figur 1 nur zwei dargestellt sind). Die beiden weiteren Anschlußstifte 23, 24 der Leuchtstofflampe 2 sind mit den Enden des Wicklungsabschnittes 20 verbunden. Die Enden des mittleren Wicklungsabschnittes 21 sind einerseits über einen Kondensator C4 zu einem Resonanzkreis zusammengeschlossen und ardererseits direkt mit dem Ende des benachbarten Wicklungsabschnittes 22 bzw. über einen weiteren Kondensator C5 mit dem Ende des anderen benachbarten Wicklungsabschnittes 20 zu einem Serienresonanzkreis verbunden.

Zur Hilfsimpulsstufe 17 gehört ein Transistor T2, dessen Basis über den Basisschutzwiderstand R5 in der dargestellten Weise an den Wischer 14 angeschlossen ist und dessen Kollektor über einen Arbeitswiderstand R6 an der Eingangsklemme 10 anliegt. Der Emitter des Transistors T2 ist über eine Rückschlagdiode D1 einerseits an seine Basis und über eine Schwellwertdiode D2 andererseits an die Basis des Transistors T1 des Generators 15 angeschlossen. Parallel zur Diode D1 liegt ein Arbeitspunktwiderstand R7.

Die dargestellte Schaltung arbeitet wie folgt: Nach Einschalten der Leuchte wird zunächst die Hilfsimpulsstufe 17 vom Wischer aktiviert bis sie den zum Anschwingen des Generators 15 notwendigen Startstrom an den Transistor T1 liefert. Der Generator 15 erzeugt dann auf der Sekundärseite des Transformators Tr die notwendige Zündspannung für die Leuchtstofflampe 2. Nach Ladung des Wischers 14 mindert die Hilfsimpulsstufe 17 den Startstrom auf den Betriebsstrom, der ca. 80% des Startstromes beträgt.

Der Transformator Tr ist justierbar. Vor dem Einsatz der Signalleuchte wird das Vorschaltgerät mit Hilfe des Transformators Tr auf eine Betriebsfrequenz abgestimmt, die oberhalb von 40 KHz liegt. Die Abstimmung erfolgt nach Maßgabe des von der Leuchtstofflampe 2 abgegebenen Funkstörpegels. Es hat sich gezeigt, daß es für jede der beschriebenen einseitig gesockelten Kompakt-Leuchtstofflampen eine Betriebsfrequenz gibt, bei der der Funkstörpegel zu einem Minimum wird oder ganz verschwindet. Bei einer Leuchtstofflampe mit einer Lampenleistung von 7 Watt liegt diese Betriebsfrequenz, bei der der Funkstörpegel verschwindet, zwischen 80 und 90 KHz.

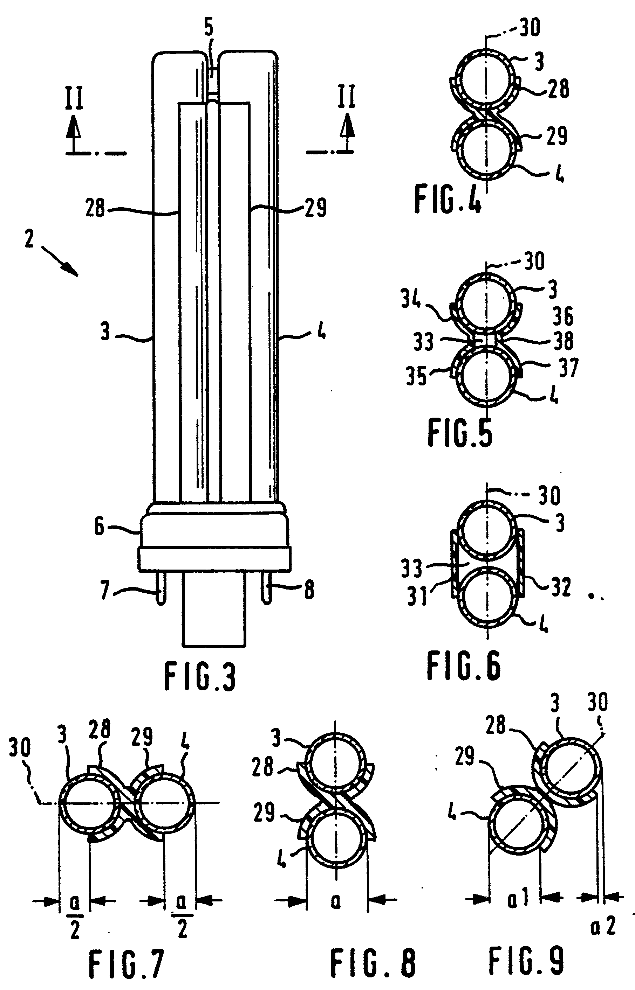

In den Figuren 3—9 ist die Kompatk-Leuchtstofflampe 2 ohne Gehäuse und Vorschaltgerät dargestellt. Zwischen den beiden Schenkeln 3, 4 sind Blenden 28, 29 angeordnet, die in einer Projektion auf die durch die beiden Schenkel 3, 4 definierten Ebene 30 jeweils eine Hälfte jeden Schenkels 3 bzw. 4 abdecken. Die Blenden 28, 29 erstrecken sich jeweils über die volle Höhe der Schenkel 3, 4.

Bei der in den Figuren 3 und 4 dargestellten Ausführung bestehen die Blenden 28, 29 aus zylindermantelförmigen Halbschalen, deren Innendurchmesser dem Außendurchmesser der Schenkel 3, 4 angepaßt ist. Die halbschalenförmigen Blenden 28, 29 sind jeweils auf die einander zugewandten Seiten der Schenkel 3, 4 derart aufgesetzt, daß die einander zugewandten Hälften der beiden Schenkel 3, 4 durch die Blenden 28, 29 abgedeckt sind.

Bei der in Figur 6 dargestellten Ausführung bestehen die Blenden aus ebenen Streifen 31, 32, die so gegen die Außenseiter der Schenkel 3, 4 gesetzt sind, daß sie den Spalt 33 zwischen den Schenkeln 3, 4 und jeweils eine Hälfte jeden Schenkels 3, 4 überdecken. Nicht dargestellte Befestigungselemente können durch den Spalt 33 geführt sein.

Ähnliches gilt auch für die in Figur 5 dargestellte Ausführung, bei der die streifenförmigen Blenden jeweils zwei schalenförmig gekrümmte Randzonen 34, 35 bzw. 36, 47 aufweisen, deren Innendurchmesser etwa dem Außendurchmesser der Schenkel 3, 4 entspricht und die etwa ein Fünftel bis ein Sechstel des Umfangs der Schenkel 3, 4 abdecken. Jeweils zwei zu einem Streifen gehörende Randzonen 34, 35 bzw. 36, 37 sind durch einen mittigen Steg 38 miteinander vereinigt. Am Steg 38 können nicht dargestellt Befestigungselemente angreifen.

Die Figuren 7, 8 und 9 zeigen, daß ein in einiger Entfernung von der Signalleuchte stehender Beobachter unabhängig von dem jeweiligen Winkel zu der durch die beiden Schenkel 3, 4 definierten Ebene 30 immer die gleiche Lichtstärke mißt. Geht man davon aus, daß die Schenkel 3, 4 der Leuchtstofflampe 2 über ihre Oberfläche gleiche Lichtmengen aussenden und nimmt den Durchmesser eines Schenkels 3 bzw. 4 mit a an, dann erkennt man, daß bei der in Figur 7 dargestellten Projektion, d.h., wenn der Beobachter senkrecht auf die Ebene 30 sieht, jeder Schenkel zur Hälfte abgedeckt ist bzw. nur zur Hälfte sichtbar ist, —entsprechend dem halben Durchmesser a/2. Wenn der Beobachter entsprechend Figur 8 in der Ebene 30 steht, sieht er lediglich einen Schenkel 3 bzw. 4, der andere Schenkel ist abgedeckt. Bei Zwischenstellungen, wie sie in Figur 9 angedeutet sind, sieht der Beobachter von dem Schenkel 4 nur einen Abschnitt der Breite a 1 und von Schenkel 4 einen Abschnitt mit der Breite a 2. Die Summe von a 1 und a 2 entspricht aber dem Durchmesser a. Also besitzt eine Signalleuchte mit der dargestellten Leuchtstofflampe eine konstante Lichtverteilungskurve.

Das gilt im wesentlichen auch, wenn die Blenden 28, 29 aus einem opaken Material bestehen, welches teilweise lichtdurchlässig ist. Damit kann die Lichtstärke verbessert werden, ohne daß die Lichtverteilung ungünstig beeinflußt wird.

## Patentansprüche

1. Leuchte, insbesondere Signalleuchte für Wasserfahrzeuge, mit einer oberhalb von 40 KHz betriebenen Leuchtstofflampe und einem zugeordneten Vorschaltgerät, gekennzeichnet durch eine U-förmige Leuchtstofflampe (2) mit zwei zueinander parallelen Schenkeln (3, 4) und durch eine bei der der Funkstörpegel der Leuchtstofflampe (2) durch gengenseitige überlagerung der von den U-Schenkeln (3, 4) ausgehenden Störfelder zu einem Minimum wird oder ganz verschwindet.

2. Leuchte nach Anspruch 1, dadurch gekennzeichnet, daß die Betriebsfrequenz oberhalb von 50 KHz liegt.

3. Leuchte nach Anspruch 1 oder 2, dadurch gekennzeichnet, daß die Betriebsfrequenz unterhalb von 100 KHz liegt.

4. Leuchte nach einem der Ansprüche 1—3, dadurch gekennzeichnet, daß die Betriebsfrequenz zwischen 80 und 90 KHz liegt.

5. Leuchte nach einem der Ansprüche 1—4, dadurch gekennzeichnet daß das Vorschaltgerät (9) einen transistorgesteuerten Generator (15), einen an dessen Transistor (T1) angeschlossenen Zünder (16) mit einem justierbaren Transformator (Tr) sowie eine an den Transistor (T1) des Generators (15) angeschlossene, von einem elektronischen Wischer (14) aktivierte, transistorgesteuerte Hilfsimpulsstufe (17) aufweist.

6. Leuchte nach Anspruch 5, dadurch gekennzeichnet, daß der Wischer (14) ein RC-Netzwerk ist.

7. Leuchte nach einem der Ansprüche 5 oder 6, dadurch gekennzeichnet, daß der Generator (15) primärseitig an den Transformator (Tr) angeschlossen ist, der sekundärseitig unter Bildung von Resonanzkreisen an die Leuchtstofflampe (2) angeschlossen ist.

8. Leuchte nach einem der Ansprüche 5 bis 7, dadurch gekennzeichnet, daß die Hilfsimpulsstufe (17) einen Transistor (T2) aufweist, dessen Kollektor mit dem Kollektor des Transistors (T1) des Generators (15) gekoppelt ist und dessen Basis mit dem Wischer (14) verbunden ist, während sein Emitter über Dioden (D1, D2) einerseits mit seiner Basis und andererseits mit der Basis des Transistors (T1) des Generators (15) verbunden ist.

9. Leuchte nach einem der Ansprüche 1 bis 8, dadurch gekennzeichnet, daß das Vorschaltgerät (9) für eine Eingangsleichspannung zwischen 12 und 24 Volt ausgelegt ist.

10. Leuchte nach einem der Ansprüche 1 bis 9, dadurch gekennzeichnet, daß zwischen den beiden Schenkeln (2, 3) Blenden (8, 9) angeordnet sind, die in einer Projektion auf die durch die beiden Schenkel (2, 3) definierten Ebene (10) jeweils eine Hälfte jeden Schenkels (2, 3) abdecken.

11. Leuchte nach Anspruch 10, dadurch gekennzeichnet, daß die Blenden (8, 9) sich über die gesamte Höhe Schenkel (2, 3) erstrecken.

12. Leuchte nach Anspruch 10 oder 11, dadurch gekennzeichnet, daß die Blenden (8, 9) Halbschalen mit dem Außendurchmesser der Schenkel (2, 3) angepaßtem Innendurchmesser sind und auf die einander zugewandten Seiten der Schenkel (2, 3) aufgesetzt sind.

13. Leuchte nach Anspruch 10 oder 11, dadurch gekennzeichnet, daß die Blenden Streifen (11, 12) sind, die den Spalt (13) zwischen den Schenkeln (2, 3) und jeweils eine Hälfte jeden Schenkels (2, 3) überdeckend gegen die beiden Schenkel (2, 3) gesetzt sind.

14. Leuchte nach Anspruch 13, dadurch gekennzeichnet, daß die Streifen (11, 12) eben sind.

15. Leuchte nach Anspruch 13, dadurch gekennzeichnet, daß die Streifen jeweils zwei schalenförmige Randzonen (14, 15; 16, 17) mit dem Außendurchmesser der Schenkel (2, 3) angepaßtem Innendurchmesser und einen die Randzonen verbindenden Steg (18) aufweisen.

16. Leuchte nach einem der Ansprüche 10—15, dadurch gekennzeichnet, daß die Blenden (8, 9) aus einem opaken Material bestehen.

## Revendications

1. Lampe, en particulier lampe de signalisation pour véhicules aquatiques, comprenant une lampe à fluorescence qui fonctionne au-dessus de 40 kHz et un appareil monté en série qui est associé à celle-ci, caractérisée par une lampe à fluorescence en forme de U (2) comprenant deux branches parallèles entre elles (3, 4), et par une fréquence de fonctionnement pour laquelle le niveau de parasites de la lampe à fluorescence (2) devient minimal ou disparaît totalement, grâce à une superposition mutuelle des champs parasitaires partant des branches (3, 4) du U.

2. Lampe selon la revendication 1, caractérisée par le fait que la fréquence de fonctionnement est supérieure à 50 kHz.

3. Lampe selon la revendication 1 ou 2, caractérisée par le fait que la fréquence de fonctionnement est supérieure à 100 kHz.

4. Lampe selon l'une des revendications 1 à 3, caractérisée par le fait que la fréquence de fonctionnement est comprise entre 80 et 90 kHz.

5. Lampe selon l'une des revendications 1 à 4, caractérisée par le fait que l'appareil monté en série (9) comprend un générateur à commande transistorisée (15), un starter (16) à transformateur réglable (Tr) relié à son transistor (T1), ainsi qu'un étage (17) à impulsions auxiliaires à commande transistorisée qui est activé par un oscillateur électronique (14) et qui est relié au transistor (T1) du générateur (15).

6. Lampe selon la revendication 5, caractérisée par le fait que l'oscillateur (14) est un circuit RC.

7. Lampe selon l'une des revendications 5 ou 6, caractérisée par le fait que le générateur (15) est relié du côté du primaire au transformateur (Tr) qui est relié du côté du secondaire à la lampe à fluorescence (2) avec formation de circuits résonnants.

8. Lampe selon l'une des revendications 5 à 7, caractérisée par le fait que l'étage (17) à impulsions auxiliaires comporte un transistor (T2) dont le collecteur est couplé au collecteur du transistor (T1) du générateur (15), et dont la base est reliée à l'oscillateur (14), cependant que son émetteur est relié par des diodes (D1, D2), d'une part à sa base, et, d'autre part, à la base du transistor (T1) du générateur (15).

9. Lampe selon l'une des revendications 1 à 8, caractérisée par le fait que l'appareil monté en série (9) est prévu pour une tension continue d'entrée entre 12 et 24 volts.

10. Lampe selon l'une des revendications 1 à 9, caractérisée par le fait qu'entre les deux branches (2, 3) sont disposés des caches (28, 29; 31, 32; 34 à 37) qui, en projection sur le plan (30) défini par les deux branches (2, 3), recouvrent à chaque fois une moitié de chaque branche (2, 3).

11. Lampe selon la revendication 10, caractérisée par le fait que les caches (28, 29; 31, 32; 34 à 37) s'étendent sur toute la hauteur des branches (2, 3).

12. Lampe selon la revendication 10 ou 11, caractérisée par le fait que les caches (28, 29) sont des demi-coquilles dont le diamètre intérieur est adapté au diamètre extérieur des branches (2, 3) et qui sont posées sur les côtés se faisant face des branches (2, 3).

13. Lampe selon la revendication 10 ou 11, caractérisée par le fait qui les caches sont des bandes (31, 32; 34 à 37) qui sont posées sur les deux branches (2, 3) et qui recouvrent l'intervalle (33) entre les branches (2, 3) et, pour chaque bande, une moitié de chaque branche (2, 3).

14. Lampe selon la revendication 13, caractérisée par le fait que les bandes (31, 32) sont planes.

15. Lampe selon la revendication 13, caractérisée par le fait que chaque bande comporte deux zones de bord en forme de coquille (34, 35; 36, 37) dont le diamètre intérieur est adapté au diamètre extérieur des branches (2, 3), et un pontet (38) reliant les zones de bord.

16. Lampe selon l'une des revendications 10 à 15, caractérisée par le fait que les caches (28, 29; 31, 32; 34 à 37) sont en matériau opaque.

**Claims**

1. Lamp, in particular signal lamp for watercraft, with a fluorescent lamp operated at above 40 kilohertz and with an associated power supply unit, characterised by a U-shaped fluorescent lamp (2) with two mutually parallel limbs (3, 4) and by an operating frequency, at which the radio interference level of the fluorescent lamp (2) becomes a minimum or disappears entirely through mutual superimposition of the interference fields emanating from the U-limbs (3, 4).

2. Lamp according to claim 1, characterised thereby, that the operating frequency lies above 50 kilohertz.

3. Lamp according to claim 1 or 2, characterised thereby, that the operating frequency lies below 100 kilohertz.

4. Lamp according to one of the claims 1 to 3, characterised thereby, that the operating frequency lies between 80 and 90 kilohertz.

5. Lamp according to one of the claims 1 to 4, characterised thereby that the power supply unit (9) displays a transistor-controlled generator (15), an igniter (16) with an adjustable transformer (Tr), which are connected to the transistor (T1) thereof, as well as a transistor-controlled auxiliary pulse stage (17), which is connected to the transistor (T1) of the generator (15) and activated by an electronic wiper (14).

6. Lamp according to claim 5, characterised thereby, that the wiper (14) is an RC-network.

7. Lamp according to one of the claims 5 and 6, characterised thereby, that the generator (15) is connected to the primary side of the transformer (Tr), which at the secondary side is connected to the fluorescent lamp (2) with the formation of resonant circuits.

8. Lamp according to one of the claims 5 to 7, characterised thereby, that the auxiliary pulse stage (17) displays a transistor (T2), the collector of which is coupled with the collector of the transistor (T1) of the generator (15) and the base of which is connected with the wiper (14), whilst its emitter is connected by way of diodes (D1, D2) on the one hand with its base and on the other hand with the base of the transistor (T1) of the generator (15).

9. Lamp according to one of the claims 1 to 8, characterised thereby, that the power supply unit (9) is designed for a direct voltage input of between 12 and 24 volts.

10. Lamp according to one of the claims 1 to 9, characterised thereby that light stops (28, 29) are arranged between both the limbs (3, 4) and—in a projection onto the plane (10) defined by both the limbs (3, 4)—each cover a respective half of each limb (3, 4).

11. Lamp according to claim 10, characterised thereby, that the light stops (28, 29) extend over the entire height of the limbs (3, 4).

12. Lamp according to claim 10 or 11, characterised thereby, that the light stops (28, 29) are half-shells with an internal diameter matched to the outside diameter of the limbs (3, 4) and are placed on the mutually facing sides of the limbs (3, 4).

13. Lamp according to claim 10 or 11, characterised thereby, that the light stops are strips (31, 32), which are set against both the limbs (3, 4) to cover the gap (33) between the limbs (3, 4) and a respective half of each limb (3, 4).

14. Lamp according to claim 13, characterised thereby, that the strips (31, 32) are planar.

15. Lamp according to claim 13, characterised thereby, that the strips each display two shell-shaped edge zones (34, 35; 36, 37) with an internal diameter matched to the outside diameter of the limbs (3, 4) and with a web (38) connecting the edge zones.

16. Lamp according to one of the claims 10 to 15, characterised thereby, that the light stops (28, 29) consist of an opaque material.

FIG.1

FIG. 2

FIG.3

FIG.4

FIG.5

FIG.6

FIG.7

FIG.8

FIG.9